# EUROPEAN PATENT APPLICATION

(11) **EP 4 481 397 A1**
(43) Date of publication of application: **25.12.2024**
(21) Application number: 22926046.8
(22) Date of filing: 28.10.2022
(51) Int. Cl.: G01N 35/04

(54) **LIQUID CONTAINER GRIPPING MECHANISM, AND AUTOMATED ANALYSIS DEVICE PROVIDED WITH LIQUID CONTAINER GRIPPING MECHANISM**

(30) Priority: 14.02.2022 JP 2022020738
(71) Applicant: HITACHI HIGH-TECH CORPORATION, Tokyo 105-6409 (JP)
(72) Inventor: TAKEDA, Naohiro, Tokyo 105-6409 (JP); YAMASHITA, Taichiro, Tokyo 105-6409 (JP); YOKOYAMA, Koki, Tokyo 105-6409 (JP)
(74) Representative: MERH-IP Matias Erny Reichl Hoffmann Patentanwälte PartG mbB
(86) International application number: PCT/JP2022/040485
(87) International publication number: WO 2023/153029

(57) **Abstract**

[Problem]

A liquid vessel holding member capable of suppressing tilts of many types of liquid vessels with different outer diameters can be provided.

[Solution]

A liquid vessel holding mechanism 400 includes a first holding member 405 configured to hold a liquid vessel 103, a second holding member 406 arranged opposite to the first holding member 405 with respect to the liquid vessel 103 and configured to hold the liquid vessel 103 together with the first holding member 405, and a coupling unit 403 configured to couple the first holding member 405 with the second holding member 406. The first holding member 405 rotates around a first rotational shaft 402, the second holding member 406 rotates around a second rotational shaft 404, and the first holding member 405 and the second holding member 406 rotate in opposite directions by substantially the same angle via the coupling unit 403.

## Description

### Technical Field

This invention relates to a liquid vessel holding mechanism and an automatic analyzer with the liquid vessel holding mechanism.

### Background Art

In an automatic analyzer detecting an object to be measured included in a sample, in order to dispense a liquid such as a sample and a reagent, it is required that a sample vessel that is a liquid vessel is not inclined and is held at a correct position of a sample installation unit. A sample to be measured by an analyzer is filled in a various kind of sample vessel whose outer diameter is different individually, and therefore it is required that an installation portion for the sample vessel holds the vessels with different outer diameters by a single mechanism.

In Patent Literature 1, there is described a structure where two holding members rotate around a common shaft and hold a reaction tube from both sides in an automatic analyzer.

Also, in Patent Literature 2, there is described that, in an automatic analyzer, in a case of a standard cup, a protrusion of the head portion of this standard cup is fixed by plural claws. Further, in Patent Literature 2, there is described, in a case of a test tube, a structure of supporting the test tube at the center position by pressing the test tube by plural claws with an even stress respectively regardless of the diameter size of the test tube.

### Citation List

### Patent Literature

Patent Literature 1: Japanese Unexamined Patent Application Publication No. 2020-186997
Patent Literature 2: Japanese Unexamined Utility Model (Registration) Application Publication No. Hei 5(1993)-062859

### Summary of Invention

### Technical Problem

However, according to the technology described in Patent Literature 1, because of the structure where two holding members rotate around a common shaft and hold a reaction tube from both sides, a difference occurs in the displacement angle of the two holding members, a difference occurs in the external force, a vessel to be held is hardly centered correctly, and the target position of holding cannot be defined. Therefore, it is probable that the reaction tube is not centered at the correct position.

According to the technology described in Patent Literature 2 also, a difference occurs in the external force of plural claws, and it is hard to center the vessel to be held correctly.

The object of the present invention is to achieve a liquid vessel holding mechanism capable of suppressing tilting of a liquid vessel and an automatic analyzer including the liquid vessel holding mechanism with respect to many types of liquid vessels with different outer diameters.

### Solution to Problem

In order to achieve the above object, the present invention is constituted as follows.

A liquid vessel holding mechanism includes: a first holding member configured to hold a liquid vessel; a second holding member arranged opposite to the first holding member with respect to the liquid vessel and configured to hold the liquid vessel together with the first holding member; and a coupling unit configured to couple the first holding member with the second holding member. In the liquid vessel holding mechanism, the first holding member rotates around a first rotational shaft, the second holding member rotates around a second rotational shaft, and the first holding member and the second holding members rotate in opposite directions by substantially the same angle via the coupling unit.

An automatic analyzer includes: a liquid vessel installation unit on which a liquid vessel filled with a liquid to be analyzed is installed; an analyzing unit configured to analyze the liquid to be analyzed; a liquid dispensing mechanism configured to dispense the liquid from the liquid vessel installed on the liquid vessel installation unit; and a liquid vessel holding mechanism configured to hold the liquid vessel installed on the liquid vessel installation unit. In the automatic analyzer, the liquid vessel holding mechanism includes: a first holding member configured to hold the liquid vessel; a second holding member arranged opposite to the first holding member with respect to the liquid vessel and configured to hold the liquid vessel together with the first holding member; and a coupling unit configured to couple the first holding member with the second holding member, and the first holding member rotates around a first rotational shaft, the second holding member rotates around a second rotational shaft, and the first holding member and the second holding member rotate in opposite directions by substantially the same angle via the coupling unit. Advantageous Effects of Invention

It is possible to achieve, with respect to many types of liquid vessels with different outer diameters, a liquid vessel holding mechanism capable of suppressing tilting of a liquid vessel and an automatic analyzer including the liquid vessel holding mechanism.

### Brief Description of Drawings

Fig. 1 is a diagram illustrating a schematic configuration of an automatic analyzer.
Fig. 2 is a flowchart for replacement of a sample vessel.
Fig. 3 is a diagram illustrating a GUI screen for replacement of a sample vessel.
Fig. 4A is a top view of a sample vessel holding mechanism.
Fig. 4B is a front view of the sample vessel holding mechanism.
Fig. 5A is a top view of a sample vessel of the sample vessel holding mechanism when the sample vessel is installed.
Fig. 5B is a front view of the sample vessel of the sample vessel holding mechanism when the sample vessel is installed.
Fig. 6A is a top view when the sample vessel receives an external force and is inclined on the sample vessel holding mechanism.
Fig. 6B is a front view when the sample vessel receives the external force and is inclined on the sample vessel holding mechanism.
Fig. 7A is a diagram illustrating one of sample vessel holding mechanisms adjacent to each other.
Fig. 7B is a diagram illustrating the other of the sample vessel holding mechanisms adjacent to each other.
Fig. 8 is a gram illustrating results of an experiment for comparison of a conventional example with an embodiment.

### Description of Embodiments

Embodiments of the invention will now be described with reference to the drawings.

### Embodiment

First, an automatic analyzer including a sample vessel holding mechanism will be explained. An overall configuration of the automatic analyzer will be hereinafter explained, and a sample vessel mounted on the automatic analyzer and the sample vessel holding mechanism for holding the sample vessel will be thereafter explained in detail. However, the present invention can be applied not only to a sample but also to a liquid vessel filled with a liquid such as a reagent, a liquid dispensing mechanism, and a liquid vessel holding mechanism.

### (Automatic analyzer 101)

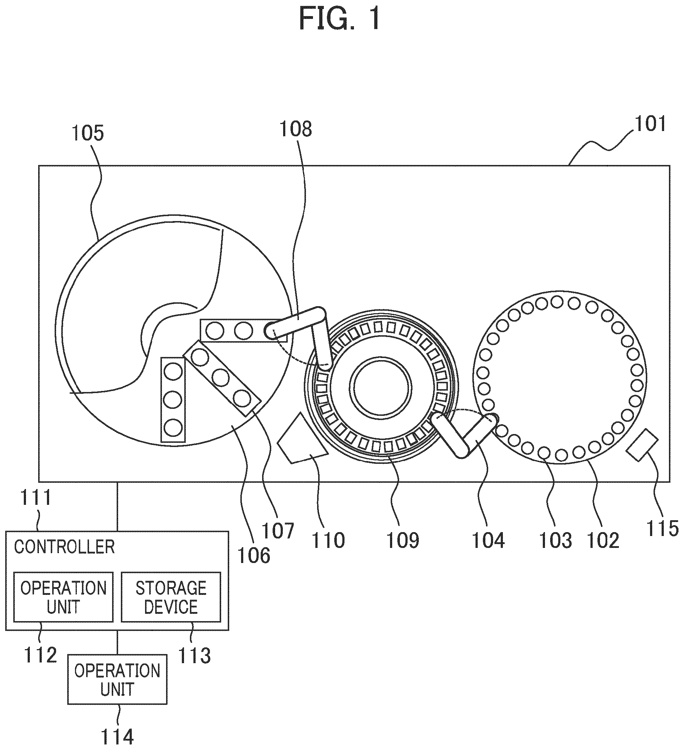

In FIG. 1, an automatic analyzer 101 is a device for analyzing a sample using a reagent appropriate to a predetermined analysis item, and includes a sample vessel installation disk (liquid vessel installation unit) 102, a sample dispensing mechanism 104, a reagent storage cabinet 105, a reagent dispensing mechanism 108, a reaction tank (reaction disk) 109, a biochemical detection unit 110 (analysis unit), a controller 111, an operation unit 112, and so on.

The sample vessel installation disk 102 has a structure of installing a sample vessel 103 in an annular shape. At the time of dispensing a sample, the sample vessel installation disk 102 rotates, and transports the sample vessel 103 to an access position of the sample dispensing mechanism 104.

On the sample vessel 103, a barcode 116 described below is displayed, and a barcode reader 115 reads the barcode 116 and transmits information of the barcode 116 to the controller 111.

The sample dispensing mechanism 104 is configured of a rotational drive mechanism, a vertical drive mechanism, and a dispensing probe, and moves between a sample aspiration position and a sample discharge position by the rotational drive mechanism and the vertical drive mechanism.

The reagent storage cabinet 105 is a mechanism for storing a reagent pack containing a reagent, and includes a reagent disk 106 and a reagent pack holder 107. The reagent storage cabinet 105 has a refrigerating function.

The reagent pack holder 107 is arrayed in a double annular shape on the reagent disk 106, and is configured to be capable of retaining plural reagent packs. The reagent disk 106 has a rotational drive mechanism, and moves each reagent pack to a predetermined position on the circumferential portion by a rotational motion.

The reagent dispensing mechanism 108 is configured of a rotational drive mechanism, a vertical drive mechanism, and a dispensing probe. The reagent dispensing mechanism 108 rotates and descends to the position of a reagent pack of a predetermined kind on the reagent disk 106, and aspirates a predetermined amount of the reagent. After aspiration of the reagent, the reagent dispensing mechanism 108 ascends. Next, the reagent dispensing mechanism 108 rotates and descends to a predetermined reaction cell on the reaction tank 109 as a reagent discharging destination, and discharges each reagent.

A biochemical analysis flow will be hereinafter explained in an order of the process.

The temperature of the reaction tank 109 is controlled to an appropriate temperature for the purpose of promoting reaction of the sample and the reagent.

First, the sample dispensing mechanism 104 dispenses a predetermined amount of the sample to a predetermined reaction cell on the reaction tank 109. Thereafter, the reaction tank 109 rotates and moves the reaction cell to which the sample has been discharged to the access position of the reagent dispensing mechanism 108, and the reagent dispensing mechanism 108 dispenses a predetermined amount of the reagent to the reaction cell to which the sample has been discharged.

When the reaction process of the sample and the reagent on the reaction tank 109 is completed, the reaction tank 109 rotates and moves the reaction cell containing a reaction liquid after completion of reaction to the placing position of the biochemical detection unit 110.

Thereafter, a reaction signal is measured by a detection unit within the biochemical detection unit 110.

Out of the automatic analyzer 101, a mechanism explained above is called an analysis operation unit.

Also, in addition to the analysis operation unit, the automatic analyzer 101 includes the controller 111 and the operation unit 112, the controller controlling operation of respective devices within the automatic analyzer 101.

The controller 111 is configured of a hardware substrate and a computer for example, and incorporates a storage device 113 such as a hard disk and a control device 114.

In the storage device 113, there is stored for example a control parameter and the like corresponding to each unit.

The controller 111 may be configured by a circuit board of exclusive use as hardware, or may be configured by software executed by a computer. When the controller 111 is to be configured by hardware, the controller 111 can be achieved by integrating plural calculators executing the process on a wiring substrate or within a semiconductor chip or a package. When the controller 111 is to be configured by software, the controller 111 can be achieved by mounting a high speed general-purpose CPU on a computer and executing a program that executes a desired calculation process. By a recording medium where this program is recorded, the existing device can be upgraded. Also, these devices and circuits and the computer are connected by a wired or wireless network, and data are transmitted and received appropriately between them.

The operation unit 112 is configured of a display device that is a display and an input device such as a mouse and a keyboard.

### (Sample vessel installation disk 102)

The sample vessel installation disk 102 can install plural sample vessels 103 on the circumference. When the sample vessel 103 having been installed is inclined with respect to the probe of the sample dispensing mechanism 104 or is held so that the center of the sample vessel 103 shifts from the access position of the dispensing probe, there are such risks that the dispensing probe collides on the inner wall of the sample vessel 103 and is broken and dispensing is not executed correctly. Therefore, it is required that the sample vessel 103 is held accurately.

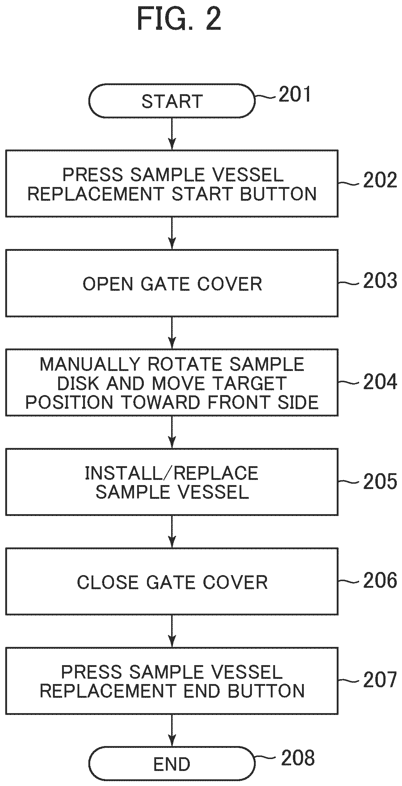

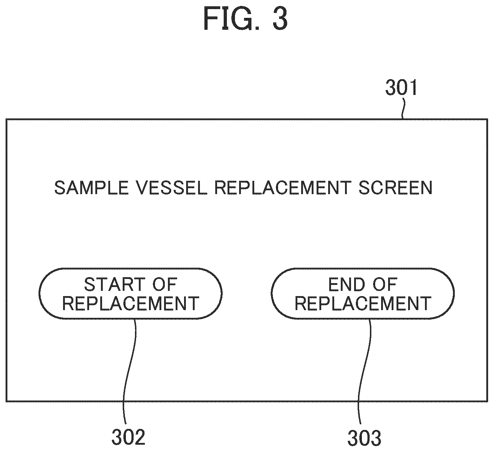

The installation/replacement process of the sample vessel 103 will be explained referring to FIG. 2. At the time of starting the sample vessel replacement process (step 201), the user presses a sample vessel replacement start button 302 (illustrated in FIG. 3) on a sample vessel replacement screen 301 (illustrated in FIG. 3) that is a GUI screen (step 202). Interlock of the gate cover is released, and the gate cover is opened to bring a state of accessibility to the sample vessel installation disk 102 (step 203).

On the sample vessel installation disk 102, plural protrusions are disposed on the circumference, the user holds the protrusion, rotates the sample vessel installation disk 102, moves the position of the installation/replacement object to the near side, and installs/replaces the sample vessel 103 (step 205). The gate cover is closed and a sample vessel replacement end button 303 (illustrated in FIG. 3) is pressed (step 207) on GUI, and the installation/replacement process for the sample vessel 103 ends (step 208).

### (Sample vessel 103)

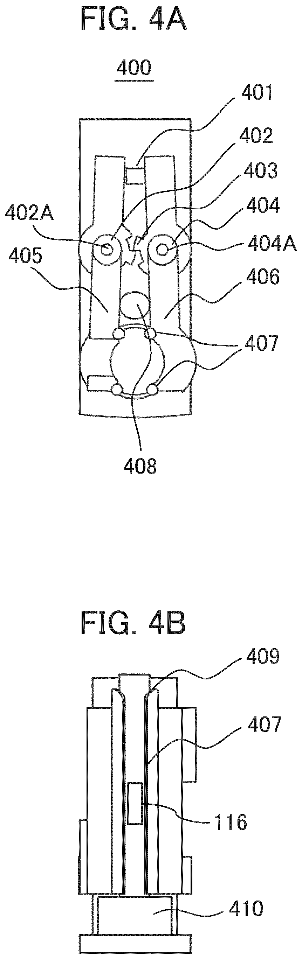

The sample vessel 103 is used separately according to the measurement item and the kind of the sample to be filled. Therefore, the sample vessel installation disk 102 is required to include a mechanism that can install the sample vessel 103 having different outer diameter. According to the present embodiment, with respect to the sample vessel 103, the position in the height direction of the sample vessel 103 is determined by pressing the sample vessel 103 by the user until the bottom surface comes into contact with a sample vessel receiver 410 (illustrated in FIG. 4B) having a semispherical shape included in a sample vessel installation mechanism 400 (illustrated in FIG. 4A to FIG. 6B). The shape of the sample vessel receiver 410 may be a flat face instead of the semispherical shape. A holding claw 405 (the first holding member) and a holding claw 406 (the second holding member) (illustrated in FIG. 4A, FIG. 5A, and FIG. 6A) included in the sample vessel holding mechanism 400 hold the sample vessel 103 from both sides (the second holding member 406 is disposed on the side opposing the first holding member 405 with the sample vessel 103 being located in between), whereby the sample vessel 103 is centered. The ideal position of centering is the position where the center of the sample vessel 103 matches the center of the sample vessel receiver 410 having a semispherical shape.

Among the sample vessels 103, there are some whose length is short to a degree of not reaching the sample vessel receiver 410 having a semispherical shape. The sample vessel 103 is caught by the upper surface of the sample vessel installation disk 102, whereby the position of these sample vessels 103 in the height direction is determined. Similarly to the sample vessel 103 having such length of reaching the sample vessel receiver 410 having a semispherical shape, centering is executed by the holding claw 405 and the holding claw 406.

The barcode 116 is adhered to the sample vessel 103 as described above, and the sample vessel 103 is identified by that the barcode reader 115 reads the barcode 116.

### (Sample vessel holding mechanism 400)

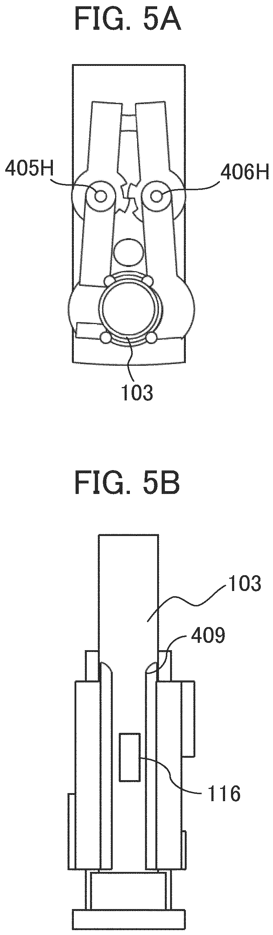

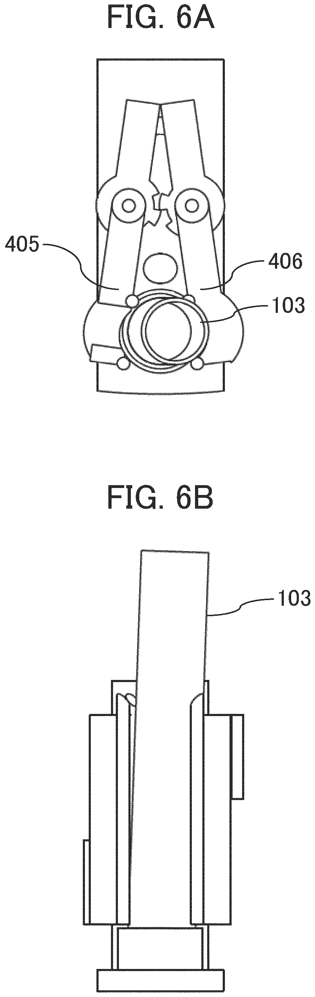

The outer diameter of the sample vessel 103 of the operation object is between ϕ11 to ϕ16, FIG. 4A and FIG. 4B are drawings illustrating a state of holding the sample vessel 103 with the outer diameter of ϕ11, FIG. 5A and FIG. 5B are drawings illustrating a state of holding the sample vessel 103 with the outer diameter of ϕ13, and FIG. 6A and FIG. 6B are drawings illustrating a state of holding the sample vessel 103 with the outer diameter of ϕ16. Between two of the holding claw 405 and the holding claw 406, a mechanical stopper 408 is disposed, and when the sample vessel 103 has not been inserted, the holding claw 405 and the holding claw 406 come into contact with the mechanical stopper 408, and have an opening width narrower than that when the sample vessel 103 of ϕ11 is inserted.

A metal spring 401 (elastic member) is attached between the holding claw 405 and the holding claw 406, the metal spring 401 is pressed and shrinks when the sample vessel 103 is inserted, and the sample vessel 103 is held from the left and right direction by a rotational force of the holding claw 405 and the holding claw 406 caused by an elastic force. That is to say, it is configured that the metal spring 401 (elastic member) attached between the holding claw 405 (the first holding member) and the holding claw 406 (the second holding member) is provided, the metal spring 401 (elastic member) exerts an elastic force between the holding claw 405 (the first holding member) and the holding claw 406 (the second holding member), the holding claw 405 (the first holding member) rotates around a rotational shaft 402 (the first rotational shaft), the holding claw 406 (the second holding member) rotates around a rotational shaft 404 (the second rotational shaft), and the rotation amounts of the holding claw 405 (the first holding member) and the holding claw 406 (the second holding member) become substantially equal to each other.

The metal spring 401 (elastic member) arranged between the holding claw 405 and the holding claw 406 may be made a twisted spring with a guide bar being arranged between the holding claw 405 and the holding claw 406. Further, instead of the metal spring, the holding claw 405 and the holding claw 406 themselves worked into a resin spring shape may be used.

The holding claw 405 and the holding claw 406 are inserted and fixed to columns of the bottom surface and the upper surface of the sample vessel installation disk 102, and the holding claw 405 and the holding claw 406 rotate with these columns being as the rotational shaft 402 (the first rotational shaft) and the rotational shaft 404 (the second rotational shaft). The rotational shaft 402 is supported by a central shaft 402A (the first holding member fixing portion) having been fixed. The rotational shaft 404 is supported by a central shaft 404A (the second holding member fixing portion) having been fixed. The central shaft 402A is inserted into a first hole 405H formed in the rotational shaft 402 of the holding claw 405, and the central shaft 404A is inserted into a second hole 406H formed in the rotational shaft 404 of the holding claw 406.

The holding claw 405 and the holding claw 406 may have such shape as having a column and being inserted into a hole that is bored in the bottom surface and the upper surface of the sample vessel installation disk 102.

Two of the holding claw 405 and the holding claw 406 are connected to each other by coupling portions 403, the coupling portion 403 has such shape that teeth are arrayed at equal intervals on the outer circumference of a disk and the coupling 403 rotates while the teeth of each of two coupling portions 403 mesh with each other, and the holding claw 405 and the holding claw 406 rotate with the rotation amount of the holding claw 405 and the holding claw 406 being substantially equal constantly. That is to say, the coupling portion 403 has a gear shape, and the holding claw 405 and the holding claw 406 are connected with the gears meshing with each other.

Thus, with a line connecting the center of the sample vessel installation disk 102 and the centering ideal position of the sample vessel 103 being as the center position, the holding claw 405 and the holding claw 406 of the left and right rotate with a displacement amount substantially equal to each other. Although a portion where the holding claw 405 and the holding claw 406 come into contact with each other may be of a structure of such friction wheel where a rubber surface comes in contact and transmit power of one side to the other by a friction force, or of a structure of stretching a belt between the holding claw 405 and the holding claw 406 to allow the holding claw 405 and the holding claw 406 to have a pulley structure, thereby synchronizing the magnitude of the displacement angle, the number of the components can be reduced, and the magnitude of the displacement angle can be made an amount strictly equal to each other, by employing the gear.

It is assumed that the sample vessel 103 receives an external force and tilts from a holding state to bring such state that only the holding claw 406 of the right side comes into contact with the sample vessel 103 (illustrated in FIG. 6A and FIG. 6B). At this time, the holding claw 405 of the left side also rotate according to inclination of the sample vessel 103, and has a displacement amount equal to that of the holding claw 406 of the right side. When it is changed to a state where an external force is not applied, the sample vessel 103 is pressed by the holding claw 406 of the right side and intends to return to the left side.

When inclination of the sample vessel 103 reduces and the rotation angle of the holding claw 406 of the right side becomes small, the rotation angle of the holding claw 405 of the left side also becomes small, and the holding claw 405 of the left side comes into contact with the sample vessel 103 in due course. Since the displacement amount of the holding claw 405 and the displacement amount of the holding claw 406 are equal to each other, and the holding claw 405 and the holding claw 406 rotate by a common metal spring 401, the magnitude of a force applied to the sample vessel 103 is also equal. Therefore, the holding claw 405 and the holding claw 406 return to the position for holding the sample vessel 103 at the idealistic position, and the sample vessel 103 comes to return correctly to the same position as before receiving the external force.

Each of the holding claw 405 and the holding claw 406 includes two sample vessel contact portions 407 (liquid vessel contact portion) having a column shape coming into contact with the sample vessel 103 (liquid vessel) and applying a holding force, and the holding claw 405 and the holding claw 406 of the left and right come into contact with the sample vessel 103 at four points in total. The position where these sample vessel contact portions 407 are formed is located at a position where, in holding the sample vessel 103 of ϕ11, ϕ13, ϕ16, difference of the holding position of the sample vessel 103 of each diameter is minimized.

From these features, the sample vessel 103 held by the holding claw 405 and the holding claw 406 is held at substantially the same position regardless of the outer diameter of the sample vessel 103. In order that the contact portion of the holding claw 405 and the holding claw 406 and the sample vessel 103 is made only these sample vessel contact portions 407 having a column shape in holding the sample vessel 103, a portion of the holding claw 405 and the holding claw 406 for holding the sample vessel 103 is of a shape of cutting off the center portion of the column as seen from the top.

FIG. 5A and FIG. 5B are the front view of a state of holding the sample vessel 103 with the outer diameter of ϕ16. The holding claw 405 and the holding claw 406 have a vertically-long shape, and inclination of the sample vessel 103 is suppressed by vertically elongating the portion where the sample vessel 103 and the holding claw 405 and the holding claw 406 are in contact with each other.

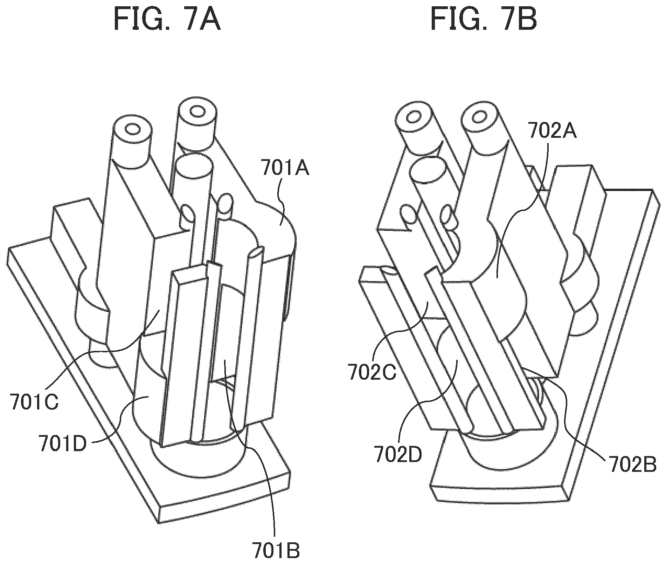

FIG. 7A and FIG. 7B are drawings illustrating the two sample vessel holding mechanisms 400 which are adjacent to each other, and are explanatory drawings for a configuration of not causing interference when the holding claw 405 and the holding claw 406 of adjacent sample vessel holding mechanism 400 opens. In FIG. 7A and FIG. 7B, illustration of a part is omitted for the convenience of explanation.

In FIG. 7A and FIG. 7B, in order that the holding claw 405 and the holding claw 406 do not interfere with each other, second interference avoidance spaces 701B, 702B which are notches are formed on the lower side of the holding claw 406 of the right side which holds the sample vessel 103.

Also, first interference avoidance spaces 701C, 702C which are notches are formed on the upper side of the holding claw 405 of the left side holding the sample vessel 103.

When the holding claw 405 and the holding claw 406 of the adjacent sample vessel holding mechanism 400 open, a second vessel holder 701A illustrated in FIG. 7A enters the first interference avoidance space 702C illustrated in FIG. 7B, whereby the interference of the holding claw 405 and the holding claw 406 is avoided. Also, a first vessel holder 702D illustrated in FIG. 7B enters the first interference avoidance space 702C illustrated in FIG. 7A, whereby the interference of the holding claw 405 and the holding claw 406 is avoided.

In a similar manner, when the holding claw 405 and the holding claw 406 of the adjacent sample vessel holding mechanism 400 open, a second vessel holder 702A enters the first interference avoidance space 701C, whereby the interference of the holding claw 405 and the holding claw 406 is avoided. Also, a first vessel holder 701D enters the second interference avoidance space 702B, whereby the interference of the holding claw 405 and the holding claw 406 is avoided.

At the upper end potion of the holding claw 405 and the holding claw 406, a guide 409 in inserting the sample vessel 103 is formed. The guide 409 formed at the upper end portion of the holding claw 405 forms an oblique surface (surface having a tapered shape) tilting toward the holding claw 406, and the guide 409 formed at the upper end portion of the holding claw 406 forms an oblique surface (surface having a tapered shape) tilting toward the holding claw 405. By forming the guide 409 at the upper end portion of the holding claw 405 and the holding claw 406, a portion with which the bottom surface of the sample vessel 103 first comes into contact is made the oblique surface, and the sample vessel 103 can be inserted while suppressing impact.

The side surface sides of the holding claw 405 and the holding claw 406 are configured so as to form a constant gap (a gap equal to or greater than the width of the barcode 116), and the opening width of the holding claw 405 and the holding claw 406 secures a width (3 mm) sufficient to read the barcode 116 when the sample vessel 103 of ϕ11 is held.

The plural sample vessel holding mechanisms 400 are disposed on the circumference on the sample vessel installation disk 102, and the plural sample vessels 103 can be installed on the circumference.

### (A case of an example different from the present invention)

As an example of a general sample vessel installation disk, plural (4 pieces for example) resin springs come into contact with the sample vessel, thereby to hold the sample vessel. Such case is imagined that the sample vessel tilts by receiving an external force from a state in which the sample vessel is held vertically.

When the sample vessel tilts to the right side, the resin spring on the right side is pressed, and the deformation amount increases. At this time, the resin spring on the left side also moves following the outer wall of the sample vessel. Therefore, such state is caused that the deformation amount of the resin spring on the right side is large and the deformation amount of the resin spring on the left side is small. When the external force of the sample vessel comes not to be applied in this state, the sample vessel comes to return to a position where the elastic force of the resin spring of the left and the right is balanced. However, when a friction force is generated between the resin spring contact portion on the left side and the outer wall of the sample vessel, a force received by the outer wall of the sample vessel on the left side becomes the resultant force of the elastic force of the resin spring and the friction force. On the other hand, since a force received by the outer wall of the sample vessel on the right side is only the elastic force, the magnitude of the required elastic force becomes larger than that of the left side, and therefore the deformation amount of the resin spring on the right side becomes larger than that of the left side. As a result, the sample vessel comes to be held in a state where the sample vessel remains tilted to the right side, and it is hard to perform centering of the sample vessel correctly.

### (Comparison of the embodiment of the present invention and an example different from the present invention)

The sample vessel holding mechanism according to the embodiment of the present invention and a sample vessel holding mechanism according to an example different from the present invention described above will be compared namely new and old structures will be compared. An experiment method for comparison will be hereinafter described.

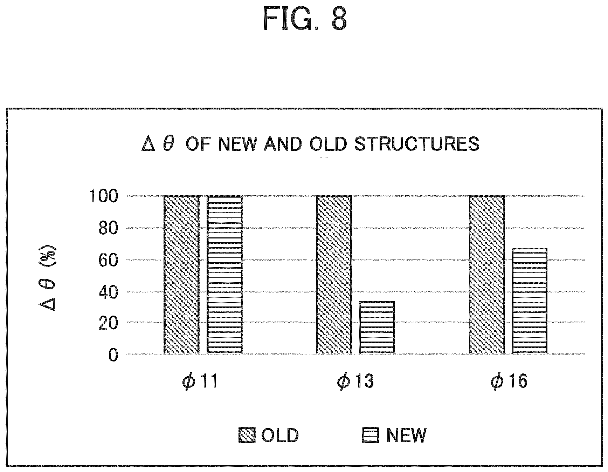

After inserting the sample vessel into the sample vessel installation portion, the upper end of the sample vessel is held, and the sample vessel is tilted in the horizontal direction. Thereafter, the angle θ formed by the center axis of the sample vessel and the vertical line is measured. A value of the error from the idealistic angle is calculated and is made dimensionless by a value of the error in a structure of an example different from the present invention is made Δθ. Also, the embodiment of the present invention and Δθ of the example different from the present invention are compared with each other. FIG. 8 is a graph of a result of comparison of Δθ of the new and old structures. In FIG. 8, one shadowed by mesh lines represents an example different from the present invention, and one with plural horizontal lines is an example of the present invention. With respect the outer diameter of ϕ11, Δθ of the both does not change. Δθ of an example of the present invention drops from Δθ of an example different from the present invention by 66.7% with respect to the outer diameter of ϕ13 and by 33.3% with respect to the outer diameter of ϕ16.

From this fact, it is known that the embodiment of the present invention is improved from an example different from the present invention in terms of the performance as the sample holding mechanism.

According to the present invention, since two of the holding claw 405 and the holding claw 406 holding the sample vessel 103 are configured so that the displacement amounts of the holding claw 405 and the holding claw 406 are equalized and rotate by common metal spring 401, the magnitude of the force applied by the holding claw 405 and the holding claw 406 are equalized, and the sample vessel 103 is positioned correctly.

As described above, according to the present invention, since it is configured that two of the holding claw 405 and the holding claw 406 are connected to each other by the metal spring 401 and are connected by the coupling portion 403 including teeth meshing with each other, opening and a pressing force applied to the sample vessel 103 of two of the holding claw 405 and the holding claw 406 are equalized, and it is possible to achieve a liquid vessel holding mechanism capable of suppressing tilting of a liquid vessel with respect to many types of liquid vessels with different outer diameters and an automatic analyzer including the liquid vessel holding mechanism.

Further, although the coupling portions 403 are configured that the tooth and tooth mesh with each other, instead of the configuration of the teeth, the coupling portions 403 may be an example of being formed of a material with high friction force and transmitting a rotative force, and may be an example of connecting the rotational shaft 402 and the rotational shaft 404 by a belt so as to rotate in the direction opposite to each other and transmitting a rotative force.

### List of Reference Signs

101 ··· Automatic analyzer, 102 ··· Sample vessel installation disk, 103 ··· Sample vessel, 104 ··· Sample dispensing mechanism, 105 ··· Reagent storage cabinet, 106 ··· Reagent disk, 107 ··· Reagent pack holder, 108 ··· Reagent dispensing mechanism, 109 ··· Reaction tank disk, 110 ··· Biochemical detection unit, 111 ··· Controller, 112 ··· Operation unit, 113 ··· Storage device, 114 ··· Control device, 115 ··· Barcode reader, 116 ··· Barcode, 201 ··· Start of sample vessel replacement, 202 ··· Process of pressing sample vessel replacement start button, 203 ··· Gate cover opening process, 204 ··· Sample disk rotation process, 205 ··· Sample vessel installation/replacement process, 206 ··· Gate cover closing process, 207 ··· Process of pressing sample vessel replacement end button, 208 ··· End of Sample vessel replacement, 301 ··· Sample vessel replacement screen, 302 ··· Sample vessel replacement start button, 303 ··· Sample vessel replacement end button, 400 ··· Sample vessel holding mechanism, 401 ··· Metal spring (elastic member), 402 ··· Rotational shaft (first rotational shaft), 402A ··· Central shaft (first holding member fixing portion), 403 ··· Coupling portion, 404 ··· Rotational shaft (second rotational shaft), 404A ··· Central shaft (second holding member fixing portion), 405 ··· Holding claw (first holding member), 405H ··· First hole, 406 ··· Holding claw (second holding member), 406H ··· Second hole, 407 ··· Sample vessel contact portion (liquid vessel contact portion), 408 ··· Mechanical stopper, 409 ··· Guide, 410 ··· Sample vessel receiver, 701A, 702A ··· Second vessel holder, 701B, 702B ··· Second interference avoidance space, 701C, 702C ··· First interference avoidance space, 701D, 702D ··· First vessel holder

## Claims

1. A liquid vessel holding mechanism comprising:
a first holding member configured to hold a liquid vessel;
a second holding member arranged opposite to the first holding member with respect to the liquid vessel and configured to hold the liquid vessel together with the first holding member; and
a coupling unit configured to couple the first holding member with the second holding member, wherein
the first holding member rotates around a first rotational shaft, the second holding member rotates around a second rotational shaft, and the first holding member and the second holding members rotate in opposite directions by substantially the same angle via the coupling unit.

2. The liquid vessel holding member according to claim 1, wherein
the coupling unit has a shape with gears, and the gears mesh with each other to couple the first holding member with the second holding member.

3. The liquid vessel holding member according to claim 1, further comprising:
a first holding member fixing portion configured to support the first holding member; and
a second holding member fixing portion configured to support the second holding member, wherein
the first holding member fixing portion is inserted in a first hole formed in the first rotational shaft, and the second holding member fixing portion is inserted in a second hole formed in the second rotational shaft.

4. The liquid vessel holding mechanism according to claim 1, further comprising an elastic member attached between the first holding member and the second holding member, wherein
the elastic member exerts an elastic force between the first holding member and the second holding member, the first holding member rotates around the first rotational shaft, the second holding member rotates around the second rotational shaft, and a rotational amount of the first holding member is substantially equal to a rotational amount of the second holding member.

5. The liquid vessel holding member according to claim 1, wherein each of the first holding member and the second holding member includes a liquid vessel contact portion that comes into contact with the liquid vessel to apply a holding force to the liquid vessel.

6. The liquid vessel holding mechanism according to claim 1, wherein an upper end portion of each of the first holding member and the second holding member is a tapered surface.

7. The liquid vessel holding mechanism according to claim 1, wherein a certain gap occurs between the first holding member and the second holding member when the liquid vessel is installed.

8. The liquid vessel holding mechanism according to claim 1, wherein the liquid vessel is a sample vessel.

9. An automatic analyzer comprising:
a liquid vessel installation unit on which a liquid vessel filled with a liquid to be analyzed is installed;
an analyzing unit configured to analyze the liquid to be analyzed;
a liquid dispensing mechanism configured to dispense the liquid from the liquid vessel installed on the liquid vessel installation unit; and
a liquid vessel holding mechanism configured to hold the liquid vessel installed on the liquid vessel installation unit, wherein
the liquid vessel holding mechanism includes
a first holding member configured to hold the liquid vessel,
a second holding member arranged opposite to the first holding member with respect to the liquid vessel and configured to hold the liquid vessel together with the first holding member, and
a coupling unit configured to couple the first holding member with the second holding member,
the first holding member rotates around a first rotational shaft, the second holding member rotates around a second rotational shaft, and the first holding member and the second holding member rotate in opposite directions by substantially the same angle via the coupling unit.

10. The automatic analyzer according to claim 9, wherein
the liquid to be analyzed is a sample, the liquid vessel is a sample vessel, the liquid vessel installation unit is a sample vessel installation disk, the liquid vessel holding mechanism is a sample vessel holding mechanism, and the sample vessel holding mechanism is a plurality of sample vessel holding mechanisms arranged on a circumference of the sample vessel installation disk.
